(19) Europäisches Patentamt
European Patent Office
Office européen des brevets

(11) **EP 4 186 350 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **22209614.1**

(22) Anmeldetag: **25.11.2022**

(51) Internationale Patentklassifikation (IPC):
**A01F 15/08** $^{(2006.01)}$

(52) Gemeinsame Patentklassifikation (CPC):
**A01F 15/0833;** A01F 2015/078; A01F 2015/0795

(54) **VERFAHREN ZUM BETREIBEN EINER RUNDBALLENPRESSE**

METHOD FOR OPERATING A ROUND BALER

PROCÉDÉ DE FONCTIONNEMENT D'UNE PRESSE À BALLES RONDES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **26.11.2021 DE 102021131105**

(43) Veröffentlichungstag der Anmeldung:
**31.05.2023 Patentblatt 2023/22**

(73) Patentinhaber: **Maschinenfabrik Bernard Krone GmbH & Co. KG**
**48480 Spelle (DE)**

(72) Erfinder: **Lehmann, Marco**
**48477 Hörstel (DE)**

(56) Entgegenhaltungen:
**EP-A1- 3 298 881      US-A1- 2011 023 442**
**US-A1- 2019 098 837**

## Beschreibung

Die vorliegende Erfindung betrifft ein Verfahren nach dem Oberbegriff von Anspruch 1 sowie eine Rundballenpresse nach dem Oberbegriff von Anspruch 13.

Rundballenpressen werden in der Landwirtschaft eingesetzt, um Erntegut wie z.B. Heu oder Stroh vom Boden aufzunehmen und zu runden Erntegutballen zu verpressen, die anschließend mit einem Bindematerial umwickelt werden können. Als Bindematerial können Schnüre, Netze oder (z.B. im Falle von Gras) Folien verwendet werden, wobei letztere auch außerhalb der Ballenpresse in einem hiervon separaten Ballenwickelgerät appliziert werden können. Das Erntegut wird zunächst (normalerweise durch eine Pick-up) vom Boden aufgenommen und weiter an einen Förderrotor oder Schneidrotor übergeben, der das Erntegut über einen Zuführkanal zur Ballenbildungskammer bzw. Presskammer fördert, wo das eigentliche Verpressen erfolgt. Dort wirken Presselemente auf das Erntegut ein, die auch als Förderelemente wirken und eine umlaufende Bewegung des Ernteguts erzeugen. Bei Pressen mit variabler Kammer wird die effektive Größe der Kammer an die zunehmende Menge von Erntegut angepasst, wobei wenigstens ein endlos umlaufendes Presselement einen überwiegenden Teil der Presskammer definiert. Das Presselement kann z.B. als Stabkettenförderer mit umlaufenden Ketten und dazwischen verlaufenden Stäben ausgebildet sein oder einen bzw. normalerweise mehrere Pressgurte oder -riemen aufweisen. Es ist über eine Mehrzahl von Führungs- oder Spannrollen geführt, wobei typischerweise wenigstens eine Spannrolle auf einer beweglichen Spannschwinge angeordnet ist. Die Spannschwinge wird entweder über Federelemente oder Aktoren mit einer Kraft beaufschlagt, durch die die Spannung im Presselement und somit auch der Pressdruck auf den Erntegutballen beeinflusst werden.

Wenn Erntegut der Presskammer zugeführt wird und der Ballen in der Presskammer wächst, wird die Spannschwinge ausgelenkt, so dass ein größerer Teil des endlosen Presselements die Presskammer umgeben kann. Im Fall eines hydraulischen Aktors wird dabei Hydraulikflüssigkeit aus dem Aktor verdrängt. Die Position der Spannschwinge kann sensorisch überwacht werden, und hieraus lässt sich die aktuelle Größe des Erntegutballens bzw. der Presskammer bestimmen. Somit kann der Fahrer eines Schleppers, welcher die Rundballenpresse zieht, darauf hingewiesen werden, dass sich der Ist-Durchmesser des Ballens einem vorgesehenen Soll-Durchmesser nähert. Daraufhin kann der Fahrer das Gespann stoppen, wodurch die Erntegutzufuhr unterbrochen wird. Der geformte Ballen kann nun mit Bindematerial umwickelt und ausgeworfen werden, wonach das Gespann wieder anfährt und die Bildung des nächsten Ballens beginnt. Falls der Soll-Durchmesser nicht erreicht werden kann, z.B. zum Ende eines Feldes, kann der Fahrer den Bindevorgang auch manuell starten. Der fertige Ballen ist dann kleiner als der Soll-Durchmesser. Unabhängig hiervon besteht allerdings das Problem, dass der erreichte Ist-Durchmesser davon abhängt, wann die Erntegutzufuhr unterbrochen wird, also z.B. wann der Fahrer das Gespann anhält. Jedoch kann der Fahrer, z.B. aufgrund lokal unterschiedlicher Erntegutmenge und -beschaffenheit, den richtigen Zeitpunkt hierfür kaum exakt abschätzen. Somit werden die einzelnen Erntegutballen unterschiedliche Durchmesser aufweisen, was z.B. beim Verladen und Transportieren zu Problemen führen kann.

Die Druckschriften US 2011/0023442 A1 und US 2019/0098837 offenbaren Rundballenpressen mit Spannschwingen nach dem Stand der Technik. EP 3 298 881 A1 weist zudem eine Steuerfunktion zur Variation des Pressdrucks auf.

Aufgabe der Erfindung ist es, die Fertigung von Rundballen möglichst gleichbleibender Größe zu ermöglichen.

Die Aufgabe wird gelöst mit einem Verfahren zum Betreiben einer Rundballenpresse, mit den Merkmalen des unabhängigen Patentanspruchs 1 sowie eine Rundballenpresse mit den Merkmalen des unabhängigen Patentanspruchs 13. Vorteilhafte Ausführungsformen sind den abhängigen Ansprüchen entnehmbar.

Dafür wird ein Verfahren zum Betreiben einer Rundballenpresse geschaffen, wobei die Rundballenpresse eine Pressvorrichtung aufweist, durch welche eine Presskammer zur Formung eines Erntegutballens wenigstens teilweise definierbar ist, wobei ein von der Pressvorrichtung auf den Erntegutballen ausgeübter Pressdruck durch wenigstens einen Aktor veränderbar ist, Zuführmittel für eine Erntegutzufuhr zur Presskammer, eine Messvorrichtung, mit der ein Ist-Durchmesser des Erntegutballens wenigstens indirekt ermittelbar ist, sowie eine Bindeeinheit für einen Bindevorgang des Erntegutballens während einer Unterbrechung der Erntegutzufuhr.

Die Rundballenpresse ist zum Pressen von landwirtschaftlichem Erntegut zu (Rund-) Ballen ausgebildet. Sie kann selbstfahrend ausgebildet sein oder dazu vorgesehen sein, von einem Schlepper gezogen zu werden. Bei dem landwirtschaftlichen Erntegut kann es sich insbesondere um Halmgut wie Gras, Stroh oder Heu handeln. Der eigentliche Pressvorgang erfolgt innerhalb der Presskammer durch die Pressvorrichtung. Die Presskammer, in der die Ballenbildung und das Pressen des Ballens erfolgen, ist wenigstens teilweise durch die Pressvorrichtung begrenzt bzw. definiert. In aller Regel handelt es sich um eine variable Presskammer. Die Pressvorrichtung kann ein oder mehrere Presselemente aufweisen, die an einem Rahmen beweglich angeordnet sind. Durch wenigstens einen Aktor, der ggf. Teil der Pressvorrichtung sein kann, ist der Pressdruck veränderbar, den die Pressvorrichtung auf den Erntegutballen ausübt. Der Pressdruck ist normalerweise nicht überall völlig konstant und kann allein aus diesem Grund nicht exakt eingestellt werden. Zumindest jedoch kann der Pressdruck durch den Aktor verstärkt oder verringert werden, d.h. er kann zumindest qualitativ gezielt beeinflusst werden. Es versteht sich, dass ein höherer Pressdruck allgemein zu einer stärkeren Verdichtung des Ernteguts führt. Der Aktor kann insbesondere als Linearaktor ausgebildet sein. Er kann z.B. elektrisch, hydraulisch oder pneumatisch betreibbar sein.

Die Zuführmittel dienen dazu, Erntegut der Presskammer zuzuführen. Hierzu kann z.B. eine Pick-up zählen, durch die das Erntegut von Boden aufgenommen wird, sowie eine Fördervorrichtung, z.B. ein Förderrotor, der das Erntegut weiter in Richtung der Presskammer fördert. Statt einer einfachen Fördervorrichtung oder zusätzlich zu dieser kann eine Schneidvorrichtung vorgesehen sein, die das Erntegut nicht nur weiterfördert, sondern auch schneidet. Auch ein Zuführkanal, den der Erntegutstrom durchläuft, bevor er zur Presskammer gelangt, kann als (passives) Zuführmittel angesehen werden.

Mit der Messvorrichtung ist ein Ist-Durchmesser des Erntegutballens wenigstens indirekt ermittelbar. D.h. die Messvorrichtung liefert wenigstens einen Wert oder Parameter, aus dem sich der Ist-Durchmesser eindeutig ermitteln lässt. Die Messvorrichtung kann wenigstens einen Sensor aufweisen, der einen Messwert liefert, aus dem sich der Ist-Durchmesser ermitteln lässt. Der Begriff "Durchmesser" ist hier nicht streng dahingehend auszulegen, dass der Erntegutballen einen perfekt kreisförmigen Querschnitt aufweisen muss. Bekanntermaßen sind geringfügige Abweichungen von der Kreisform normal; insofern kann der "Durchmesser" als mittlere Abmessung des Erntegutballens definiert werden.

Die Bindeeinheit dient dazu, einen Bindevorgang einzuleiten, bei dem der Erntegutballen nach seiner Formung mit Bindematerial versehen wird, z.B. mit wenigstens einer Schnur, einem Netz oder einer Folie. Die Bindeeinheit kann eine Bindematerialaufnahme für einen Bindematerialvorrat (typischerweise eine Rolle mit Bindematerial) aufweisen sowie eine Zuführeinheit zum Zuführen von Bindematerial zur Presskammer. Der Bindevorgang, bei dem das Bindematerial normalerweise um den Ballen gewickelt wird, während dieser in der Presskammer gedreht wird, wird während einer Unterbrechung der Erntegutzufuhr durchgeführt. D.h. wenn der Erntegutballen als fertig angesehen wird, wird kein Erntegut mehr hinzugefügt und der Bindevorgang kann beginnen. Man könnte statt einer Unterbrechung auch von einem Stopp der Erntegutzufuhr sprechen, wobei die Erntegutzufuhr allerdings zur Bildung des nächsten Ballens wieder fortgesetzt wird. Die Unterbrechung der Erntegutzufuhr beendet auch die Ballenbildung insofern, als dem Erntegutballen kein Erntegut mehr hinzugefügt wird.

Erfindungsgemäß wird während der Unterbrechung der Erntegutzufuhr eine Größenanpassung durchgeführt, indem wenigstens ein Vergleich zwischen dem Ist-Durchmesser und einem wenigstens als Soll-Durchmesserbereich vorgegebenen Soll-Durchmesser durchgeführt wird sowie wenigstens eine Druckanpassung, bei welcher der Pressdruck in Abhängigkeit von wenigstens einem Vergleich automatisch angepasst wird, um den Ist-Durchmesser an den Soll-Durchmesser anzugleichen. Der Soll-Durchmesser ist vordefiniert, d.h. er ist vor Beginn der Größenanpassung festgelegt, z.B. durch eine Eingabe eines Benutzers der Rundballenpresse. Er ist normalerweise als einzelner Wert vorgegeben. Alternativ kann er aber auch, weniger genau, als Soll-Durchmesserbereich definiert sein, der durch eine Untergrenze und eine Obergrenze charakterisiert ist. Man kann auch sagen, dass ein Vergleich zwischen dem Ist-Durchmesser einerseits und (genau) einem Soll-Durchmesser oder einem Soll-Durchmesserbereich andererseits durchgeführt wird. Ziel des Verfahrens ist es, dass der fertige, gebundene Erntegutballen möglichst exakt diesen Soll-Durchmesser aufweist. Dazu wird eine Größenanpassung durchgeführt, während die Erntegutzufuhr unterbrochen ist, also wenn dem Ballen kein Erntegut mehr hinzugefügt wird. Idealerweise würde der Ist-Durchmesser zu diesem Zeitpunkt dem Soll-Durchmesser entsprechen, in der Praxis ist dies aus unterschiedlichen Gründen meist nicht der Fall. Im Rahmen der Größenanpassung wird wenigstens ein Vergleich zwischen dem Soll-Durchmesser und dem Ist-Durchmesser durchgeführt, d.h. es wird festgestellt, ob der Erntegutballen aktuell zu groß, zu klein oder ggf. genau richtig dimensioniert ist. Des Weiteren wird wenigstens eine Druckanpassung durchgeführt. Dabei wird der Pressdruck in Abhängigkeit von wenigstens einem Vergleich automatisch angepasst. Die Anpassung erfolgt "in Abhängigkeit von" wenigstens einem Vergleich, was die Möglichkeit einschließt, dass je nach Vergleichsergebnis der Pressdruck auch unverändert bleiben kann. Ansonsten erfolgt eine automatische Veränderung des Pressdrucks, um den Ist-Durchmesser an den Soll-Durchmesser anzunähern, also die Differenz zwischen denselben zu verringern. Idealerweise soll erreicht werden, dass die Differenz null wird.

Die Grundidee ist, dass der Ballen zumindest innerhalb gewisser Grenzen noch expandieren kann oder komprimiert werden kann, nachdem die eigentliche Ballenbildung unter Erntegutzufuhr bereits beendet ist. Die Expansion oder Kompression kann durch Anpassung des Pressdrucks herbeigeführt werden. Da sich die Erntegutmenge im Ballen nicht mehr ändert, resultiert eine Veränderung der Pressdichte, die allerdings normalerweise geringfügig ist, keine praktischen Nachteile hat und auch nicht augenfällig ist. Ohne die Größenanpassung würden sich Durchmesserunterschiede im Bereich von einigen Zentimetern ergeben, die mit bloßem Auge sichtbar sind und die auch die Handhabung der Erntegutballen z.B. beim Verladen oder Transport erschweren würden. Die genannten Verfahrensschritte (insbesondere Vergleich und Druckanpassung) werden bevorzugt durch die Rundballenpresse vorgenommen bzw. durch eine Steuereinheit, die signalübertragend mit dem wenigstens einen Aktor und der Messvorrichtung verbunden ist. Diese Steuereinheit kann ganz oder teilweise in die Rundballenpresse integriert sein, sie kann aber auch ganz oder teilweise außerhalb derselben angeordnet sein, z.B. in einem Schlepper, der die Rundballenpresse zieht.

Bevorzugt wird bei wenigstens einer Druckanpassung der Pressdruck verringert, wenn der Ist-Durchmesser wenigstens kleiner als der Soll-Durchmesser ist. Dies gilt insbesondere für den Anfang der Größenanpassung. In diesem Zustand kann davon ausgegangen werden, dass der Erntegutballen nur expandieren kann, wenn der augenblicklich wirkende Pressdruck reduziert wird. "Wenigstens kleiner als der Soll-Durchmesser" bedeutet, dass hier auch ein stärkeres Kriterium geprüft werden kann, z.B. ob der Ist-Durchmesser um einen (weiter unten noch erwähnten) vordefinierten Toleranzwert unterhalb des Soll-Durchmessers liegt. Ebenso ist es bevorzugt, dass bei wenigstens einer Druckanpassung der Pressdruck erhöht wird, wenn der Ist-Durchmesser wenigstens größer als der Soll-Durchmesser ist. Auch dies gilt insbesondere wiederum für den Anfang der Größenanpassung, wo davon ausgegangen werden kann, dass der Erntegutballen nur durch eine Erhöhung des Pressdrucks komprimiert werden kann. Auch hier kann optional geprüft werden, ob der Ist-Durchmesser um den vordefinierten Toleranzwert oberhalb des Soll-Durchmessers liegt.

Vorteilhaft weist die Pressvorrichtung wenigstens ein gegenüber einem Rahmen umlaufend antreibbares, endloses Presselement auf, welches über wenigstens eine gegenüber dem Rahmen verstellbar angeordnete Spannrolle geführt ist, welche zur Veränderung des Pressdrucks durch wenigstens einen Aktor beaufschlagt wird. Der Rahmen bildet gewissermaßen die Grundstruktur der Rundballenpresse und verleiht ihr insgesamt Stabilität. Am Rahmen sind über eine geeignete Aufhängung auch Laufräder angebunden, ebenso wie - im Falle einer gezogenen Ausgestaltung - eine Deichsel. Außerdem weist der Rahmen typischerweise ein Gehäuse auf, das die innenliegenden Teile, namentlich die Presskammer, nach außen abschirmt. Das endlose Presselement kann insbesondere als ein oder mehrere endlose Pressriemen bzw. -gurte ausgebildet sein, alternativ aber auch z.B. als Kettenstabförderer. In jedem Fall ist es umlaufend antreibbar, wozu es z.B. über eine Mehrzahl von Führungsrollen bzw. Spannrollen geführt ist, von denen wenigstens eine mit einem Antrieb verbunden ist. Jede Führungs- bzw. Spannrolle dient zum einen der Führung des Presselements, zum anderen aber in der Regel auch zur Aufrechterhaltung einer (Zug-)Spannung im Presselement. Wenigstens eine Spannrolle ist gegenüber dem Rahmen verstellbar angeordnet, d.h. sie ist nicht nur drehbar, sondern kann in ihrer Gesamtheit gegenüber dem Rahmen verstellt werden. Durch die Verstellung der Spannrolle(n) erhält das endlose Presselement mehr oder weniger freie Länge, innerhalb derer die Presskammer definiert werden kann. Eine Größenänderung des Erntegutballens ist daher nur unter Verstellung der Spannrolle(n) möglich, weshalb aus der Position der Spannrolle(n) auf den Ist-Durchmesser geschlossen werden kann. Ein bestimmter Pressdruck, den das Presselement auf den Erntegutballen ausübt, entspricht einer bestimmten Zugspannung im Presselement, die wiederum einer bestimmten Kraft zwischen Spannrolle und Presselement entspricht. Wird die Spannrolle - direkt oder indirekt - durch wenigstens einen Aktor mit Kraft beaufschlagt, bewirkt dies einen bestimmten Pressdruck. Zwischen Kraft und Pressdruck besteht ein eindeutiger (wenngleich i.Allg. nicht-linearer) Zusammenhang. Abgesehen von der Beeinflussung des Pressdrucks kann der wenigstens eine Aktor die Spannrolle auch verstellen, was einer Veränderung der Größe der Presskammer bzw. des Ist-Durchmessers entspricht.

Im Zusammenhang mit der oben geschilderten Ausführungsform ist es bevorzugt, dass die Messvorrichtung eine aktuelle Position wenigstens einer Spannrolle bestimmt. Typischerweise ist die Spannrolle an einer Spannschwinge angeordnet, die schwenkbar mit dem Rahmen verbunden ist. Die aktuelle Position der Spannrolle kann daher bspw. über einen Sensor ermittelt werden, der den Schwenkwinkel der Spannschwinge ermittelt. Da das Presselement in der Regel eine vernachlässigbare Dehnbarkeit aufweist, besteht eine eindeutige Beziehung zwischen der Position der wenigstens einen Spannrolle und dem Ist-Durchmesser. Im Falle mehrerer unabhängig voneinander beweglicher Spannrollen ist die Beziehung unter Umständen komplizierter, allerdings kann auch hier aus den Positionen der einzelnen Spannrollen der Ist-Durchmesser eindeutig ermittelt werden. Ein Aktor, der z.B. als Linearaktor ausgebildet sein kann, wirkt zwischen Rahmen und Spannschwinge und kann diese verstellen bzw. durch Kraftbeaufschlagung der Spannschwinge den Pressdruck beeinflussen.

Gemäß einer Ausgestaltung wird die Größenanpassung wenigstens teilweise während des Bindevorgangs durchgeführt. Normalerweise wird das Bindematerial in mehreren Lagen um den Erntegutballen gewickelt. Nach Abschluss des Bindevorgangs bilden diese Lagen von Bindematerial in der Regel eine Hülle, die den Ist-Durchmesser definiert, d.h. der Erntegutballen kann nicht mehr expandieren. Ebenso würde eine mögliche Kompression des derart entwickelten Erntegutballen nicht von Dauer sein. Solange im Verlauf des Bindevorgangs allerdings das Bindematerial noch nicht vollständig aufgebracht wurde (bspw. nur ein Teil der insgesamt vorgesehenen Lagen), kann der Erntegutballen zusammen mit dem Bindematerial noch expandieren und es ist ebenso möglich, den Erntegutballen zusammen mit dem Bindematerial zu komprimieren und die noch folgenden Lagen entsprechend enger zu wickeln. Eine Größenanpassung während des Bindevorgangs ist insofern vorteilhaft, als hierdurch Zeit eingespart werden kann. Unter Umständen kann auch Energie gespart werden, da bspw. eine stärkere Kompression nur kurze Zeit aufrechterhalten werden muss, bevor sie durch das Umwickeln des Erntegutballens gesichert wird.

Alternativ oder zusätzlich kann die Größenanpassung wenigstens teilweise vor Beginn des Bindevorgangs durchgeführt werden. Dies kann insbesondere dann sinnvoll sein, wenn der anfänglich gemessene Ist-Durchmesser deutlich vom Soll-Durchmesser abweicht oder wenn das verwendete Bindematerial wenig dehnbar bzw. verformbar ist, so dass eine Anpassung nur noch in begrenztem Maße möglich ist, sobald Bindematerial auf den Erntegutballen aufgebracht ist. In beiden Fällen kann es sinnvoll sein, gewissermaßen eine vorgeschaltete Anpassung des Ist-Durchmessers vorzunehmen.

Unter günstigsten Umständen wäre es vorstellbar, lediglich einen Vergleich sowie eine Druckanpassung durchzuführen, um den Soll-Durchmesser zu erreichen. Dies würde allerdings voraussetzen, dass das Kompressionsverhalten bzw. Expansionsverhalten des Erntegutballen vollständig vorhersehbar ist. Erfahrungsgemäß unterscheidet sich dieses Verhalten allerdings auch bei ein und derselben Art von Erntegut z.B. in Abhängigkeit von Ort und Zeitpunkt der Ernte. Daher wird eine solche einmalige Anpassung in der Regel keine optimalen Ergebnisse liefern. Bevorzugt werden daher nacheinander eine Mehrzahl von Vergleichen sowie in Abhängigkeit hiervon eine Mehrzahl von Druckanpassungen durchgeführt. D.h., es werden ein erster Vergleich und (soweit nötig) eine erste Druckanpassung vorgenommen. Nach einiger Zeit (bspw. wenigen Sekunden) wird ein zweiter Vergleich vorgenommen, womit gewissermaßen die Wirkung der ersten Druckanpassung kontrolliert werden kann. Falls nötig, wird eine zweite Druckanpassung vorgenommen usw. Wie weiter unten noch erläutert wird, muss die zweite Druckanpassung nicht ausschließlich auf dem zweiten Vergleich basieren, sondern könnte auch den ersten Vergleich bzw. den ersten sowie zweiten gemessenen Ist-Durchmesser einbeziehen. Die Intervalle zwischen den einzelnen Vergleichen können unterschiedlich groß gewählt werden, wobei auch eine quasikontinuierliche Druckanpassung denkbar wäre, bei der die Vergleiche ohne wesentlichen Zeitabstand aufeinander folgen.

Hinsichtlich der Initiierung des Bindevorgangs bestehen unterschiedliche Möglichkeiten. Gemäß einer Ausgestaltung wird der Bindevorgang automatisch begonnen, sobald die Unterbrechung der Erntegutzufuhr erkannt wird. In aller Regel muss die Erntegutzufuhr unterbrochen sein, um zu verhindern, dass das Bindematerial bzw. die Bindeeinheit durchloses Erntegut verunreinigt oder blockiert werden. Danach kann der Bindevorgang unmittelbar ausgelöst werden, bspw. durch die Rundballenpresse bzw. eine Steuereinheit der Rundballenpresse, sobald diese die Unterbrechung erkennt. Selbstverständlich ist es auch möglich, dass der Fahrer des Schleppers die Möglichkeit hat, den Bindevorgang manuell auszulösen.

Die Unterbrechung der Ernteblutzufuhr kann in unterschiedlicher Weise erkannt werden. Unabhängig davon, ob es sich um eine selbstfahrende oder gezogene Rundballenpresse handelt, wird die Erntegutzufuhr unterbrochen, wenn die Rundballenpresse zum Stehen kommt, wobei es möglich wäre, dass die Erntegutzufuhr noch eine gewisse Zeit weiterläuft, falls die Zuführmittel bei Stillstand der Rundballenpresse noch weiter fördern. In diesem Fall könnte eine feste Zeitverzögerung vorgesehen werden. In jedem Fall könnte die Rundballenpresse einen Geschwindigkeitssensor aufweisen und die Unterbrechung der Erntegutzufuhr mittels des Geschwindigkeitssensors anhand eines Stillstands der Rundballenpresse erkannt werden. Alternativ oder zusätzlich könnte die Rundballenpresse einen Zufuhrsensor zum Erkennen der Erntegutzufuhr aufweisen, mittels dessen die Unterbrechung der Erntegutzufuhr erkannt wird. Ein solcher Sensor könnte erfassen, ob die Zuführmittel sich noch bewegen, ob noch Erntegut im Zuführkanal vorhanden ist (mit einer Lichtschranke, Ultraschallsensoren etc.) oder dergleichen.

Sofern es sich um eine gezogene Rundballenpresse handelt, ist diese während des Verfahrens an einen Schlepper gekoppelt, mit anderen Worten einen Traktor oder eine Zugmaschine, also allgemein ein angetriebenes Fahrzeug, das dazu geeignet ist, die Rundballenpresse zu ziehen. Neben der reinen Zugkraftübertragung wird dabei oftmals auch Energie für verschiedene Systeme der Rundballenpresse vom Schlepper übertragen, bspw. über eine Antriebswelle und/oder einen elektrischen, pneumatischen und/oder hydraulischen Anschluss. Schließlich können auch Signale vom Schlepper übertragen werden, entweder drahtlos oder drahtgebunden, beispielsweise über ISOBUS. In diesem Fall kann die Rundballenpresse auch ohne eigene Sensoren die Unterbrechung der Erntegutzufuhr erkennen, und zwar anhand eines Signals, welches sie vom Schlepper empfängt. Das Signal kann bspw. anzeigen, dass der Schlepper angehalten hat. Durch das Anhalten des Schleppers wird zwangsläufig die Erntegutzufuhr unterbrochen.

Einerseits kann der aktuelle Ist-Durchmesser als Kriterium dafür herangezogen werden, ob der Pressdruck verändert werden sollte. Allerdings reagiert der Erntegutballen, je nach Art und Zustand des Ernteguts, möglicherweise mit einer gewissen Verzögerung auf eine Veränderung des Pressdrucks. D.h. auch wenn sich ein bestimmter Ist-Durchmesser mit einem bestimmten Pressdruck erzeugen lässt, kann es sein, dass dieser Ist-Durchmesser nicht "sofort", sondern erst nach einer gewissen Zeit angenommen wird. D.h. der aktuelle Pressdruck könnte beispielsweise zur Herstellung des Soll-Durchmessers geeignet sein, aber eine aktuelle Messung des Ist-Durchmessers würde immer noch eine Abweichung ergeben, weil der Erntegutballen dabei ist, zu expandieren bzw. komprimiert zu werden. Diese Problematik lässt sich dadurch berücksichtigen, dass der Ist-Durchmesser mehrmals nacheinander ermittelt wird und hieraus eine zeitliche Veränderung VD ermittelt wird, z.B.

$$VD = DI(t1) - DI(t0),$$

wobei *DI(t0)* und *DI(t1)* die Ist-Durchmesser zu unterschiedlichen Zeitpunkten *t0, t1* repräsentieren. Bei wenigstens einer Druckanpassung wird der Pressdruck wenigstens teilweise in Abhängigkeit von der zeitlichen Veränderung angepasst. D.h. es wird nicht nur der Ist-Durchmesser berücksichtigt, sondern auch dessen Veränderung. Sofern sich der Ist-Durchmesser zumindest qualitativ richtig verändert (also bei zu großem Ist-Durchmesser verkleinert bzw. bei zu kleinem Ist-Durchmesser vergrößert), wirkt der aktuelle Pressdruck in der beabsichtigten Weise. Ist dies der Fall, kann der Pressdruck ggf. beibehalten werden, obwohl der Soll-Durchmesser noch nicht erreicht wurde. Es könnte auch ermittelt werden, um wieviel sich der Ist-Durchmesser innerhalb einer gewissen Zeit verändert hat und ob unter diesen Umständen damit zu rechnen ist, dass der Soll-Durchmesser demnächst erreicht wird. Falls nicht, kann der Pressdruck verändert werden. Es wäre sogar denkbar, eine zu schnelle Annäherung an den Soll-Durchmesser zu erkennen, bei der die Gefahr besteht, dass sich der Ist-Durchmesser über den Soll-Durchmesser hinaus verändert, also gewissermaßen über das Ziel hinausschießt. In diesem Fall könnte bei einer Kompression der Pressdruck reduziert werden bzw. bei einer Expansion erhöht werden, um ein solches "Überschwingen" zu vermeiden.

Sofern die Größenanpassung vor dem Bindevorgang begonnen wird, bestehen unterschiedliche Möglichkeiten für den Start des Bindevorgangs. Der Bindevorgang könnte starten, wenn eine vorgegebene Verzögerungszeit seit dem Beginn der Unterbrechung der Erntegutzufuhr vergangen ist. Es kann aber auch ein gewissermaßen "flexibleres" Kriterium definiert werden. Gemäß einer Ausgestaltung wird der Bindevorgang nach Beginn der Größenanpassung begonnen, sobald der Ist-Durchmesser höchstens um einen vordefinierten Toleranzwert vom Soll-Durchmesser abweicht. D.h. die Größenanpassung startet und der Ist-Durchmesser wird (ggf. wiederholt) mit dem Soll-Durchmesser verglichen. Es ist ein Toleranzwert vordefiniert, der z.B. wenige Zentimeter oder Millimeter beträgt. Wenn die Abweichung des Ist-Durchmessers *DI* vom Soll-Durchmesser *DS* höchstens dem Toleranzwert *TW* entspricht, also

$$|DI - DS| <= TW,$$

wird dies als ausreichende Anpassung angesehen, um den Bindevorgang einzuleiten. Je nach Toleranzwert und anfänglichem Ist-Durchmesser ist es z.B. auch möglich, dass der Bindevorgang unmittelbar nach dem ersten Vergleich gestartet wird. Auf die Definition eines Toleranzwertes kann verzichtet werden, wenn der Soll-Durchmesser als Soll-Durchmesserbereich vorgegeben ist, da dies ohnehin schon eine Toleranz beinhaltet.

Eine vorteilhafte Ausgestaltung sieht vor, dass nach Beginn der Größenanpassung der Bindevorgang begonnen wird, wenn wenigstens eine Druckanpassung zu einer Veränderung *VD* des Ist-Durchmessers geführt hat, die betragsmäßig höchstens einem vordefinierten Schwellwert *SW* entspricht, also

$$|VD| <= SW.$$

Der Schwellwert könnte dabei auch mit Null definiert werden, oder mit einem anderen (positiven) Wert, der eine vernachlässigbare Veränderung charakterisiert. Normalerweise sollte eine Druckanpassung dazu führen, dass sich der Ist-Durchmesser ändert, zumindest nach einer gewissen Zeit, die das Erntegut benötigt, um auf die Druckanpassung zu reagieren. Es könnte allerdings sein, dass die Druckveränderung zu keiner bzw. nur einer minimalen Veränderung des Ist-Durchmessers führt, entweder weil das Erntegut im Rahmen der Möglichkeiten der Pressvorrichtung maximal komprimiert ist oder weil es voll expandiert ist. Ersteres könnte der Fall sein, wenn deutlich zu viel Erntegut aufgenommen wurde, so dass sich der Ist-Durchmesser nicht mehr auf den Soll-Durchmesser reduzieren lässt. Letzteres könnte z.B. der Fall sein, wenn am Ende des Feldes deutlich zu wenig Erntegut für die Bildung eines Ballens normaler Größe aufgenommen werden kann. Dann könnte es sein, dass der Erntegutballen auch bei minimalem Pressdruck nicht auf den Soll-Durchmesser expandieren kann. In beiden Fällen wäre es sinnlos, den Bindevorgang noch weiter zu verzögern. Dieser wird also eingeleitet, auch wenn der Soll-Durchmesser noch nicht erreicht wurde.

Die Aufgabe wird weiterhin gelöst mit einer Rundballenpresse mit den Merkmalen des unabhängigen Patentanspruchs 13. Die Rundballenpresse weist eine Pressvorrichtung auf, durch welche eine Presskammer zur Formung eines Erntegutballens wenigstens teilweise definierbar ist, wobei ein von der Pressvorrichtung auf den Erntegutballen ausgeübter Pressdruck durch wenigstens einen Aktor veränderbar ist, Zuführmittel für eine Erntegutzufuhr zur Presskammer, eine Messvorrichtung, mit der ein Ist-Durchmesser des Erntegutballens wenigstens indirekt ermittelbar ist, sowie eine Bindeeinheit für einen Bindevorgang des Erntegutballens während einer Unterbrechung der Erntegutzufuhr.

Erfindungsgemäß ist die Rundballenpresse dazu eingerichtet, während der Unterbrechung der Erntegutzufuhr eine Größenanpassung durchzuführen, indem sie wenigstens einen Vergleich zwischen dem Ist-Durchmesser und einem wenigstens als Soll-Durchmesserbereich vorgegebenen Soll-Durchmesser durchführt sowie wenigstens eine Druckanpassung, bei welcher sie den Pressdruck in Abhängigkeit von wenigstens einem Vergleich automatisch anpasst, um den Ist-Durchmesser an den Soll-Durchmesser anzugleichen.

Die genannten Begriffe wurden bereits oben mit Bezug auf das erfindungsgemäße Verfahren erläutert und werden daher nicht nochmals erklärt. Vorteilhafte Ausgestaltungen der erfindungsgemäßen Rundballenpresse entsprechen denen des erfindungsgemäßen Verfahrens.

Die Rundballenpresse weist bevorzugt eine Steuereinheit auf. Die Steuereinheit ist signalübertragend mit dem wenigstens einen Aktor und der Messvorrichtung verbindbar. Die Verbindung kann drahtgebunden und/oder drahtlos herstellbar sein. Funktionen der Steuereinheit können wenigstens teilweise softwaremäßig implementiert sein.

Die Steuereinheit ist dazu eingerichtet, während der Unterbrechung der Erntegutzufuhr eine Größenanpassung durchzuführen, indem sie wenigstens einen Vergleich zwischen dem Ist-Durchmesser und einem wenigstens als Soll-Durchmesserbereich vorgegebenen Soll-Durchmesser durchführt sowie wenigstens eine Druckanpassung, bei welcher sie den Pressdruck in Abhängigkeit von wenigstens einem Vergleich automatisch anpasst, um den Ist-Durchmesser an den Soll-Durchmesser anzugleichen. Es versteht sich, dass die Steuereinheit die Druckanpassung mittels des wenigstens einen Aktors durchführt, wenn sie mit diesem signalübertragend verbunden ist.

Die genannten Begriffe wurden bereits oben mit Bezug auf das erfindungsgemäße Verfahren erläutert und werden daher nicht nochmals erklärt.

Im Folgenden wird die Erfindung anhand von Figuren beschrieben. Die Figuren sind lediglich beispielhaft und schränken den allgemeinen Erfindungsgedanken nicht ein. Es zeigen

Fig. 1    eine Schnittdarstellung einer erfindungsgemäßen Rollenballenpresse;

Fig. 2    ein Flussdiagramm einer ersten Ausführungsform eines erfindungsgemäßen Verfahrens; und

Fig. 3    ein Flussdiagramm einer zweiten Ausführungsform eines erfindungsgemäßen Verfahrens.

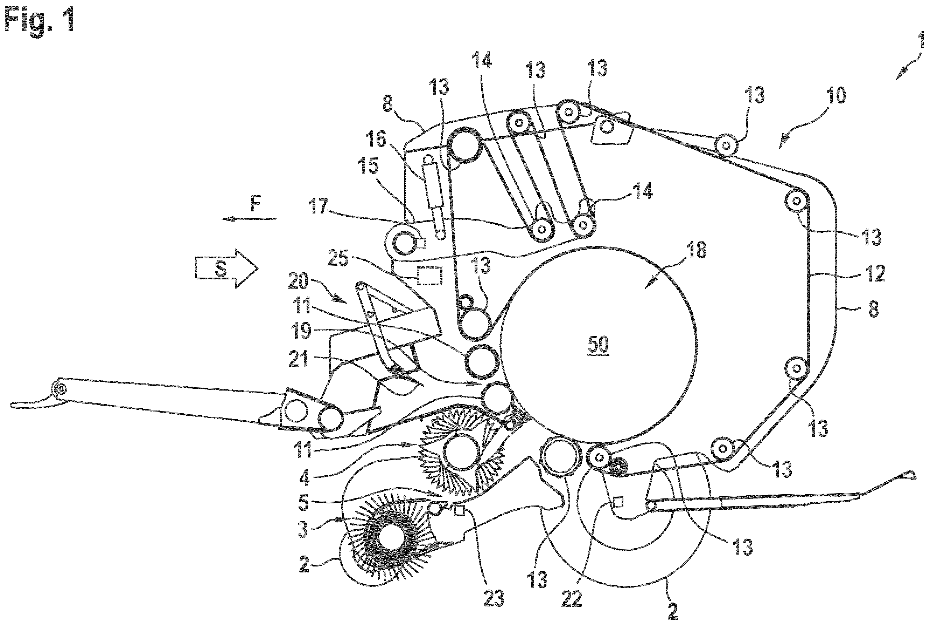

Fig. 1 zeigt eine Rollenballenpresse 1 gemäß der vorliegenden Erfindung. Diese ist dazu vorgesehen, von einer Zugmaschine bzw. einem Schlepper (nicht dargestellt) gezogen zu werden. An einem Rahmen 8 der Rollenballenpresse 1 ist abgesehen von Laufrädern 2, auf welchen die Rollenballenpresse 1 aufsteht, eine Pressvorrichtung 10 angeordnet, die eine Presskammer 18 variabler Größe zur Bildung eines Erntegutballens 50 ausbilden kann. In einer Fahrtrichtung F vorderseitig am Rahmen 8 ist eine Pick-up 3 erkennbar, die dazu dient, Erntegut wie z.B. Stroh, Heu oder Gras, vom Boden aufzunehmen. Von der Pick-up 3 gelangt das Erntegut zu einem Schneidrotor 4, der das Erntegut ergreift, zerschneidet und weiter entgegen der Fahrtrichtung F und leicht aufwärts durch einen Förderkanal 5 transportiert. Die Pick-up 3 und der Schneidrotor 4 (welcher auch als einfacher Förderrotor ausgebildet sein könnte) dienen der Erntegutzufuhr zur Presskammer 18. Durch einen im bzw. am Zuführkanal 5 angeordneten Zufuhrsensor 23 kann festgestellt werden, ob aktuell Erntegut im Zuführkanal 5 gefördert wird.

Die Pressvorrichtung 10 weist drei Presswalzen 11 sowie wenigstens einen Pressriemen 12 (ggf. auch mehrere senkrecht zur Zeichenebene nebeneinander angeordnete Pressriemen) auf, welche zusammen die Presskammer 18 definieren. Die Presswalzen 11 sowie der Pressriemen 12 bewirken eine Rotation des Erntegutballens 50 und gleichzeitig ein Verpressen des Ernteguts, welches im Zuführkanal 5 bereits vorverdichtet werden kann. Der Pressriemen 12 ist über eine Mehrzahl von stationär gelagerten drehbaren Führungsrollen 13 geführt sowie über zwei Spannrollen 14, die an einer Spannschwinge 15 gelagert sind, die wiederum schwenkbar am Rahmen 8 angeordnet ist. Da der Pressriemen 12 eine praktisch konstante Länge aufweist und ständig unter Spannung gehalten werden muss, muss die Spannschwinge 15 ausgelenkt werden, um unterschiedliche Größen des Erntegutballens 50 auszugleichen. Ist der Erntegutballen 50 klein bzw. die Presskammer 18 leer, ist die Spannschwinge 15 abwärts geschwenkt. Ist der Erntegutballen 50 groß, ist die Spannschwinge 15 aufwärts geschwenkt. Es besteht ein eindeutiger Zusammenhang zwischen einem Ist-Durchmesser des Erntegutballens 50 und einer Position der Spannschwinge 15, welche über eine Messvorrichtung, in diesem Fall einen Positionssensor 17, gemessen werden kann. Die Spannschwinge 15 ist über einen Aktor 16 mit dem Rahmen 8 verbunden und kann durch diesen Aktor 16 aktiv geschwenkt oder in einer bestimmten Position mit einer unterschiedlich starken Kraft beaufschlagt werden. Durch diese werden wiederum die (Zug-)Spannung im Pressriemen 12 und der auf den Erntegutballen 50 wirkende Pressdruck beeinflusst.

Wenn der Erntegutballen 50 fertiggestellt wurde, wird er noch innerhalb der Presskammer 18 mit einem hier nicht dargestellten Bindematerial (bspw. einem Netz) umwickelt, bevor er schließlich entgegen der Fahrtrichtung F nach hinten ausgeworfen wird. Für den Bindevorgang wird das Bindematerial durch einen Zuführschnabel 21 einer Bindeeinheit 20 erfasst, der das Bindematerial durch einen zwischen zwei Presswalzen 11 ausgebildeten Spalt 19 bis an den Erntegutballen 50 heranführt. Von dort wird das Bindematerial durch die Rotation des Erntegutballens 50 und der benachbarten Presswalze 11 zwischen diesen hindurchgezogen, wobei es am Erntegutballen 50 anhaftet und dann durch dessen Rotation um ihn herumgewickelt wird.

Die Rundballenpresse 1 weist eine Steuereinheit 25 auf, die teilweise auch softwaremäßig realisiert sein kann. Diese ist signalübertragend mit den Sensoren 17, 22, 23 sowie mit dem Aktor 16 verbunden. Alternativ zu einer Anordnung in der Rundballenpresse 1 könnte die Steuereinheit 25 auch ganz oder teilweise außerhalb angeordnet sein, z.B. im Schlepper oder in einem tragbaren Gerät.

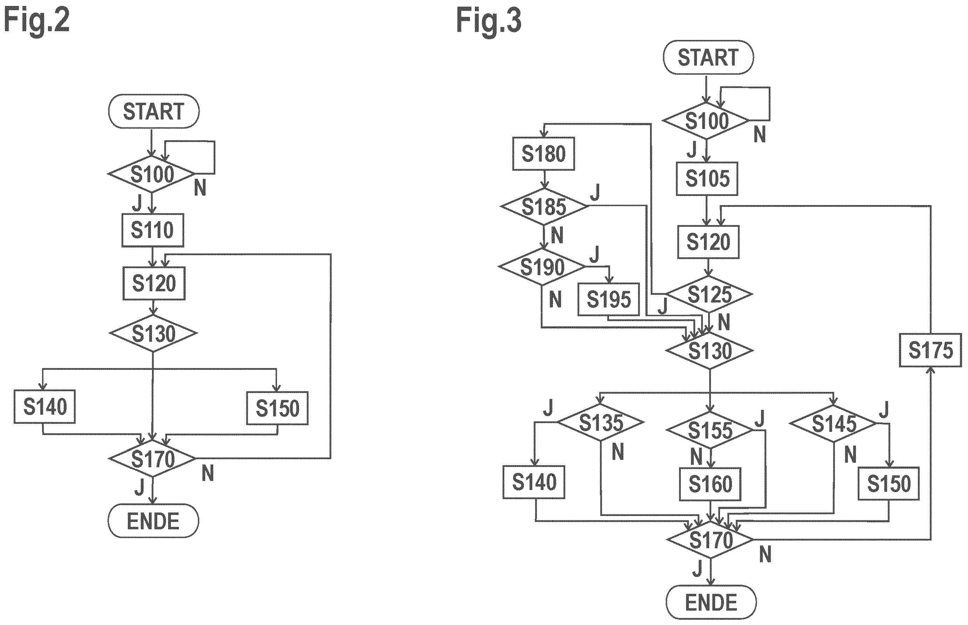

Der Benutzer (in diesem Fall der Fahrer des Schleppers) kann normalerweise wenigstens drei Parameter für die Herstellung des Erntegutballens 50 vorgeben: den Pressdruck, einen Soll-Durchmesser DS für den Erntegutballen 50 sowie die Anzahl der Lagen Bindemittel. Der Soll-Durchmesser DS ist in diesem Beispiel ein einzelner Wert. Alternativ könnte er auch ein Soll-Durchmesserbereich sein. Es sind auch noch weitere Parameter möglich, z.B. eine Variation des Pressdrucks, wodurch ein weniger dichter Kern und ein dichterer Mantel hergestellt werden können. Mittels des Positionssensors 15 wird der Ist-Durchmesser überwacht und ein Hinweis an den Fahrer ausgegeben, wenn der Soll-Durchmesser demnächst erreicht wird. Dann kann der Fahrer eine Unterbrechung der Erntegutzufuhr auslösen, indem er das Gespann aus Schlepper und Rundballenpresse 1 anhält. Nun kann der Bindevorgang beginnen. Aufgrund unterschiedlicher Umstände weist der Erntegutballen zu diesem Zeitpunkt oftmals einen Ist-Durchmesser *DI* auf, der sich vom Soll-Durchmesser *DS* unterscheidet. Dies kann mit einer ersten Ausführungsform eines erfindungsgemäßen Verfahrens korrigiert werden, welches im Flussdiagramm in Fig. 2 dargestellt ist. Das Verfahren wird durch die Steuereinheit 25 der Rundballenpresse 1 gesteuert.

Nach dem Start des Verfahrens wird in Schritt S100 überprüft, ob die Erntegutzufuhr unterbrochen wurde. Hierzu bestehen verschiedene Möglichkeiten. Bspw. kann die Steuereinheit 25 ein Signal S vom Schlepper empfangen, welches anzeigt, dass dieser angehalten hat. Alternativ kann die Steuereinheit 25 über den Geschwindigkeitssensor 22 feststellen, dass sie selbst angehalten hat. Beides bedeutet, dass kein weiteres Erntegut mehr aufgenommen und zur Presskammer 18 geführt werden kann. Schließlich kann über den Zufuhrsensor 23 auch unmittelbar festgestellt werden, ob noch Erntegut zur Presskammer 18 geführt wird. Diese Überprüfung wird so lange wiederholt, bis die Erntegutzufuhr unterbrochen ist. Dann wird in Schritt S110 der Bindevorgang begonnen und in Schritt S120 der Ist-Durchmesser *DI* ermittelt. Im nachfolgenden Schritt S130 wird der Ist-Durchmesser mit dem Soll-Durchmesser verglichen. Sofern der Ist-Durchmesser sich höchstens um einen Toleranzwert *TW* vom Soll-Durchmesser unterscheidet, also

$$|DI-DS|<=TW,$$

fährt das Verfahren direkt mit Schritt S170 fort. Ist der Ist-Durchmesser um mehr als den Toleranzwert kleiner als der Soll-Durchmesser, also

$$DS-DI>TW,$$

wird in Schritt S140 der Pressdruck verringert, bevor das Verfahren mit Schritt S170 fortfährt. Ist der Ist-Durchmesser um mehr als den Toleranzwert größer als der Soll-Durchmesser, also

$$DI-DS>TW,$$

wird in Schritt S150 der Pressdruck erhöht und das Verfahren fährt mit Schritt S170 fort. Bei S170 wird geprüft, ob der Bindevorgang bereits abgeschlossen ist. Falls ja, endet das Verfahren, falls nein, kehrt es zur Bestimmung des Ist-Durchmessers bei Schritt S120 zurück. Es erfolgt also eine wiederholte Überprüfung des Ist-Durchmessers und eine Anpassung des Pressdrucks, wobei stets versucht wird, den Ist-Durchmesser an den Soll-Durchmesser anzugleichen. Je nach Bindematerial und Anzahl der Lagen könnte es sinnvoll sein, in Schritt S170 nicht das Ende des Bindevorgangs zu überprüfen, sondern ob bereits so viel Bindematerial um den Erntegutballen 50 gewickelt wurde, dass keine Beeinflussung des Ist-Durchmessers durch den Pressdruck mehr erzielt werden kann.

Fig. 3 zeigt eine zweite, komplexere Ausführungsform des erfindungsgemäßen Verfahrens, wobei gleiche Schritte die gleichen Nummern wie in Fig. 2 tragen. Falls in Schritt S100 die Unterbrechung der Erntegutzufuhr festgestellt wird, wird in Schritt S105 eine Veränderung *VD* des Ist-Durchmessers mit dem Wert Null initialisiert. Dann fährt das Verfahren direkt mit Schritt S120 fort, ohne den Bindevorgang zu beginnen. In einer Variante des Verfahrens könnte auch der Schritt S110 eingefügt werden, womit die nachfolgend beschriebenen Schritte S155, S160, S185, S190 und S195 entfallen würden.

In dem auf Schritt S120 folgenden Schritt S125 wird überprüft, ob bereits ein vorhergehender Ist-Durchmesser gespeichert wurde. Ist dies nicht der Fall, fährt das Verfahren mit Schritt S130 fort, wo wiederum der oben beschriebene Vergleich zwischen dem Ist-Durchmesser und dem Soll-Durchmesser durchgeführt wird. Allerdings wird die Druckvergrößerung in Schritt S140 nur dann durchgeführt, wenn ein vorgeschalteter Vergleich in Schritt S135 ergeben hat, dass die Veränderung VD des Ist-Durchmessers nicht um wenigstens einen Schwellwert *SW* unter Null liegt, also

$$VD+SW>=0.$$

Dies wäre bei der oben beschriebenen Initialisierung der Fall, so das zunächst der Schritt S140 durchgeführt würde. Der Schwellwert *SW* ist normalerweise positiv, könnte aber auch Null sein. Falls der Ist-Durchmesser höchstens um den Toleranzwert *TW* vom Soll-Durchmesser abweicht, wird in Schritt S155 überprüft, ob der Bindevorgang bereits begonnen wurde. Falls nein, wird der Bindevorgang in Schritt S160 gestartet, falls ja, wird der Schritt S160 übersprungen und das Verfahren fährt mit Schritt S170 fort. Die Druckverringerung in Schritt S150 wird wiederum nur dann durchgeführt, wenn in einem vorgeschalteten Schritt S145 festgestellt wurde, dass die Veränderung des Ist-Durchmessers kleiner als der Schwellwert SW ist, also

$$VD<SW.$$

Auch dies wäre bei der genannten Initialisierung der Fall.

Falls in Schritt S170 festgestellt wird, dass der Bindevorgang noch nicht abgeschlossen ist, wird in Schritt S175 der zuletzt ermittelte Ist-Durchmesser abgespeichert und das Verfahren kehrt zu Schritt S120 zurück. Da nunmehr ein gespeicherter vorheriger Ist-Durchmesser vorliegt, führt die Abfrage in Schritt S125 zu einem positiven Ergebnis und das Verfahren fährt mit Schritt S180 fort, wo die Veränderung des Ist-Durchmessers als Differenz des aktuellen Ist-Durchmessers $DI(t1)$ und des vorhergehenden Ist-Durchmessers $DI(t0)$ berechnet wird.

$$VD=DI(t1)-DI(t0),$$

In Schritt S185 wird geprüft, ob der Bindevorgang bereits begonnen hat. Ist dies der Fall, fährt das Verfahren direkt mit Schritt S130 fort. Falls nein, wird in Schritt S190 überprüft, ob die Veränderung betragsmäßig höchstens dem Schwellwert entspricht, also

$$|VD|<SW.$$

Falls dies der Fall ist, wird im Schritt S195 der Bindevorgang gestartet. Falls nein, wird der Schritt S195 übersprungen und das Verfahren fährt direkt mit Schritt S130 fort. Da nunmehr eine im Allgemeinen von Null verschiedene Veränderung VD berechnet wurde, kann es bspw. sein, dass in Schritt S130 festgestellt wird, dass der Ist-Durchmesser zu klein ist, allerdings in Schritt S135 festgestellt wird, dass die Veränderung deutlich positiv ist, also dass der Erntegutballen 50 zuletzt expandiert hat. In diesem Fall erfolgt keine (erneute) Druckverringerung in Schritt S140, sondern dieser wird übersprungen. Entsprechend könnte in Schritt S130 festgestellt werden, dass der Ist-Durchmesser zu groß ist, während in Schritt S145 festgestellt wird, dass die Veränderung deutlich negativ ist, also dass der Erntegutballen 50 zuletzt komprimiert wurde. In diesem Fall erfolgt keine (erneute) Druckerhöhung in Schritt S150, sondern das Verfahren fährt direkt mit Schritt S170 fort. Die Überprüfung in den Schritten S135 sowie S145 berücksichtigt, dass die Vergleiche in Schritt S130 und die Druckanpassungen in Schritt S140 bzw. S150 unter Umständen schneller aufeinanderfolgen können, als der Erntegutballen 50 reagieren kann. D.h. es wird eine gewisse Trägheit des Erntegutes berücksichtigt. Die Schritte S135 und S145 können entfallen, falls die Vergleiche gemäß Schritt S130 in so großem zeitlichem Abstand aufeinanderfolgen, dass man davon ausgehen kann, dass der Erntegutballen 50 zwischenzeitlich vollständig auf Veränderungen des Pressdrucks reagieren kann.

**Patentansprüche**

1. Verfahren zum Betreiben einer Rundballenpresse (1) mit einer Pressvorrichtung (10), durch welche eine Presskammer (18) zur Formung eines Erntegutballens (50) wenigstens teilweise definierbar ist, wobei ein von der Pressvorrichtung (10) auf den Erntegutballen (50) ausgeübter Pressdruck durch wenigstens einen Aktor (16) veränderbar ist, Zuführmitteln (3, 4) für eine Erntegutzufuhr zur Presskammer (18), einer Messvorrichtung (17), mit der ein Ist-Durchmesser ($DI$) des Erntegutballens (50) wenigstens indirekt ermittelbar ist, sowie einer Bindeeinheit (20) für einen Bindevorgang des Erntegutballens (50) während einer Unterbrechung der Erntegutzufuhr,

   **dadurch gekennzeichnet, dass**
   während der Unterbrechung der Erntegutzufuhr eine Größenanpassung durchgeführt wird, indem wenigstens ein Vergleich (S130) zwischen dem Ist-Durchmesser ($DI$) und einem wenigstens als Soll-Durchmesserbereich vorgegebenen Soll-Durchmesser ($DS$) durchgeführt wird sowie wenigstens eine Druckanpassung (S140, S150), bei welcher der Pressdruck in Abhängigkeit von dem wenigstens einen Vergleich automatisch angepasst wird, um den Ist-Durchmesser ($DI$) an den Soll-Durchmesser ($DS$) anzugleichen.

2. Verfahren nach Anspruch 1, **dadurch gekennzeichnet, dass** bei wenigstens einer Druckanpassung (S140, S150) der Pressdruck verringert wird, wenn der Ist-Durchmesser ($DI$) kleiner als der Soll-Durchmesser ($DS$) ist und/oder der Pressdruck erhöht wird, wenn der Ist-Durchmesser ($DI$) größer als der Soll-Durchmesser ($DS$) ist.

3. Verfahren nach einem der vorangehenden Ansprüche, **dadurch gekennzeichnet, dass** die Pressvorrichtung (10) wenigstens ein gegenüber einem Rahmen (8) umlaufend antreibbares, endloses Presselement (12) aufweist, welches über wenigstens eine gegenüber dem Rahmen (8) verstellbar angeordnete Spannrolle (14) geführt ist, welche zur Veränderung des Pressdrucks durch den wenigstens einen Aktor (16) beaufschlagt wird.

4. Verfahren nach einem der vorangehenden Ansprüche, **dadurch gekennzeichnet, dass** die Messvorrichtung (17) eine aktuelle Position wenigstens einer Spannrolle (14) bestimmt.

5. Verfahren nach einem der vorangehenden Ansprüche, **dadurch gekennzeichnet, dass** die Größenanpassung wenigstens teilweise während des Bindevorgangs durchgeführt wird.

6. Verfahren nach einem der Ansprüche 1 - 4, **dadurch gekennzeichnet, dass** die Größenanpassung wenigstens teilweise vor Beginn des Bindevorgangs durchgeführt wird.

7. Verfahren nach einem der vorangehenden Ansprüche, **dadurch gekennzeichnet, dass** der Bindevorgang automatisch begonnen wird (S110), sobald die Unterbrechung der Erntegutzufuhr erkannt wird (S100).

8. Verfahren nach einem der vorangehenden Ansprüche, **dadurch gekennzeichnet, dass** die Rundballenpresse (1) einen Geschwindigkeitssensor (22) und/oder einen Zufuhrsensor (23) zum Erkennen der Erntegutzufuhr aufweist und die Unterbrechung der Erntegutzufuhr mittels des Geschwindigkeitssensors (22) anhand eines Stillstands der Rundballenpresse (1) und/oder mittels des Zufuhrsensors (23) erkannt wird (S100).

9. Verfahren nach einem der vorangehenden Ansprüche, **dadurch gekennzeichnet, dass** die Rundballenpresse (1) an einen Schlepper gekoppelt ist und die Unterbrechung der Erntegutzufuhr anhand eines Signals (S) erkennt (S100), welches sie vom Schlepper empfängt.

10. Verfahren nach einem der vorangehenden Ansprüche, **dadurch gekennzeichnet, dass** der Ist-Durchmesser (DI) mehrmals nacheinander ermittelt wird (S120), hieraus eine zeitliche Veränderung (VD) ermitteln wird (S180) und bei wenigstens einer Druckanpassung (S140, S150) der Pressdruck wenigstens teilweise in Abhängigkeit von der zeitlichen Veränderung (VD) angepasst wird.

11. Verfahren nach einem der vorangehenden Ansprüche, **dadurch gekennzeichnet, dass** nach Beginn der Größenanpassung der Bindevorgang begonnen wird (S160), sobald der Ist-Durchmesser (DI) höchstens um einen vordefinierten Toleranzwert (TW) vom Soll-Durchmesser (DS) abweicht.

12. Verfahren nach Anspruch 10, **dadurch gekennzeichnet, dass** nach Beginn der Größenanpassung der Bindevorgang begonnen wird (S195), wenn wenigstens eine Druckanpassung (S140, S150) zu einer zeitlichen Veränderung (VD) des Ist-Durchmessers (DI) geführt hat, die betragsmäßig höchstens einem vordefinierten Schwellwert (SW) entspricht.

13. Rundballenpresse (1) mit einer Pressvorrichtung (10), durch welche eine Presskammer (18) zur Formung eines Erntegutballens (50) wenigstens teilweise definierbar ist, wobei ein von der Pressvorrichtung (10) auf den Erntegutballen (50) ausgeübter Pressdruck durch wenigstens einen Aktor (16) veränderbar ist, Zuführmitteln (3, 4) für eine Erntegutzufuhr zur Presskammer (18), einer Messvorrichtung (17), mit der ein Ist-Durchmesser (DI) des Erntegutballens (50) wenigstens indirekt ermittelbar ist, sowie einer Bindeeinheit (20) für einen Bindevorgang des Erntegutballens (50) während einer Unterbrechung der Erntegutzufuhr,
**dadurch gekennzeichnet, dass**
die Rundballenpresse (1) dazu eingerichtet ist, während der Unterbrechung der Erntegutzufuhr eine Größenanpassung durchzuführen, indem sie wenigstens einen Vergleich (S130) zwischen dem Ist-Durchmesser (DI) und einem wenigstens als Soll-Durchmesserbereich vorgegebenen Soll-Durchmesser (DS) durchführt sowie wenigstens eine Druckanpassung (S140, S150), bei welcher sie den Pressdruck in Abhängigkeit von wenigstens einem Vergleich automatisch anpasst, um den Ist-Durchmesser (DI) an den Soll-Durchmesser (DS) anzugleichen.

14. Rundballenpresse nach Anspruch 13, **dadurch gekennzeichnet, dass** sie eine Steuereinheit (25) aufweist, die signalübertragend mit Sensoren (17, 22, 23) sowie dem Aktor (16) verbunden ist und zur Steuerung des Verfahrens nach einem der Patentansprüche 1 - 13 vorgesehen ist.

## Claims

1. Method for operating a round baler (1) comprising a pressing device (10), by means of which a pressing chamber (18) for forming a crop bale (50) can be at least partially defined, wherein a pressing pressure exerted by the pressing device (10) on the crop bale (50) can be varied by at least one actuator (16), feed means (3, 4) for feeding crop to the pressing chamber (18), a measuring device (17) by means of which an actual diameter (DI) of the crop bale (50) can be at least indirectly determined, and a binding unit (20) for a binding process of the crop bale (50) during an interruption of the crop feed,
**characterized in that**
during the interruption of the crop feed, a size adjustment is carried out by at least one comparison (S130) being made between the actual diameter (DI) and a target diameter (DS) specified at least as a target diameter range, as well as at least one pressure adjustment (S140, S150), in which the pressing pressure is automatically adjusted according to the at least one comparison in order to adjust the actual diameter (DI) to the target diameter (DS).

2. Method according to claim 1, **characterized in that** in at least one pressure adjustment (S140, S150) the pressing pressure is reduced if the actual diameter (*DI*) is smaller than the target diameter (*DS*) and/or the pressing pressure is increased if the actual diameter (*DI*) is larger than the target diameter (*DS*).

3. Method according to any of the preceding claims, **characterized in that** the pressing device (10) has at least one endless pressing element (12) which can be driven in rotation relative to a frame (8) and which is guided over at least one tensioning roller (14) which is arranged adjustably relative to the frame (8) and is acted upon by the at least one actuator (16) to change the pressing pressure.

4. Method according to any of the preceding claims, **characterized in that** the measuring device (17) determines a current position of at least one tensioning roller (14).

5. Method according to any of the preceding claims, **characterized in that** the size adjustment is carried out at least partially during the binding process.

6. Method according to any of claims 1 - 4, **characterized in that** the size adjustment is carried out at least partially before the binding process begins.

7. Method according to any of the preceding claims, **characterized in that** the binding process is started automatically (S110) as soon as the interruption of the crop feed is detected (S100).

8. Method according to any of the preceding claims, **characterized in that** the round baler (1) has a speed sensor (22) and/or a feed sensor (23) for detecting the crop feed and the interruption of the crop feed is detected (S100) by means of the speed sensor (22) on the basis of a standstill of the round baler (1) and/or by means of the feed sensor (23).

9. Method according to any of the preceding claims, **characterized in that** the round baler (1) is coupled to a tractor and detects (S100) the interruption of the crop feed on the basis of a signal (*S*) which it receives from the tractor.

10. Method according to any of the preceding claims, **characterized in that** the actual diameter (*DI*) is determined several times in succession (S120), a temporal change (*VD*) is determined (S180) therefrom and, in at least one pressure adjustment (S140, S150), the pressing pressure is adjusted at least partially on the basis of the temporal change (*VD*).

11. Method according to any of the preceding claims, **characterized in that** after the size adjustment has begun, the binding process is started (S160) as soon as the actual diameter (*DI*) deviates from the target diameter (*DS*) by at most a predefined tolerance value (*TW*).

12. Method according to claim 10, **characterized in that** after the size adjustment has begun, the binding process is started (S195) if at least one pressure adjustment (S140, S150) has led to a temporal change (*VD*) in the actual diameter (*DI*), the amount of which corresponds at most to a predefined threshold (*SW*).

13. Round baler (1) comprising a pressing device (10), by means of which a pressing chamber (18) for forming a crop bale (50) can be at least partially defined, wherein a pressing pressure exerted by the pressing device (10) on the crop bale (50) can be varied by at least one actuator (16), feed means (3, 4) for feeding crop to the pressing chamber (18), a measuring device (17) by means of which an actual diameter (*DI*) of the crop bale (50) can be at least indirectly determined, and a binding unit (20) for a binding process of the crop bale (50) during an interruption of the crop feed,
**characterized in that**
the round baler (1) is designed to carry out a size adjustment during the interruption of the crop feed by making at least one comparison (S130) between the actual diameter (*DI*) and a target diameter (*DS*) specified at least as a target diameter range, as well as at least one pressure adjustment (S140, S150), in which it automatically adjusts the pressing pressure according to at least one comparison in order to adjust the actual diameter (*DI*) to the target diameter (*DS*).

14. Round baler according to claim 13, **characterized in that** it has a control unit (25) which is connected to sensors (17, 22, 23) and to the actuator (16) in a signal-transmitting manner and is intended to control the method according to any of claims 1-13.

**Revendications**

1. Procédé pour faire fonctionner une presse (1) à bottes rondes comprenant un dispositif (10) de presse, par lequel une chambre (18) de presse pour le formage d'une botte (50) de récolte peut être définie au moins en partie, dans lequel une pression de presse appliquée par le dispositif (10) de presse sur la botte (50) de récolte peut être modifiée par au moins un actionneur (16), des moyens (3, 4) d'apport pour un apport de récolte à la chambre (18) de presse, un dispositif (17) de mesure, par lequel un diamètre (*DI*) réel de la botte (50) de récolte peut être déterminé au moins indirectement, ainsi qu'un dispositif (20) de liage pour une opération de liage de la botte (50) de récolte pendant une interruption de l'apport de récolte, **caractérisé en ce que,** pendant l'interruption de l'apport de récolte on effectue une adaptation de dimension, par le fait qu'on effectue au moins une comparaison (S130) entre le diamètre (*DI*) réel et un diamètre (*DS*) de consigne donné à l'avance au moins comme plage de diamètre de consigne, ainsi qu'au moins une adaptation (S140, S150) de pression, dans laquelle on adapte automatiquement la pression de presse en fonction de la au moins une comparaison, afin d'égaliser le diamètre (*DI*) réel au diamètre (*DS*) de consigne.

2. Procédé suivant la revendication 1, **caractérisé en ce que**, pour au moins une adaptation (S140, S150) de pression, on diminue la pression de presse si le diamètre (*DI*) réel est plus petit que le diamètre (*DS*) de consigne et/ou on augmente la pression de presse si le diamètre (*DI*) réel est plus grand que le diamètre (*DS*) de consigne.

3. Procédé suivant l'une des revendications précédentes, **caractérisé en ce que** le dispositif (10) de presse a, pouvant être entrainé en circulation par rapport à un châssis (8), au moins un élément (12) de presse sans fin, qui passe sur au moins un rouleau (14) tendeur monté réglable par rapport au châssis (8), rouleau qui est soumis à l'effet du au moins un actionneur (6) pour la modification de la pression de presse.

4. Procédé suivant l'une des revendications précédentes, **caractérisé en ce que** le dispositif (17) de mesure détermine une position en cours d'au moins un rouleau (14) tendeur.

5. Procédé suivant l'une des revendications précédentes, **caractérisé en ce que** l'on effectue l'adaptation de dimension au moins en partie pendant l'opération de liage.

6. Procédé suivant l'une des revendications 1 à 4, **caractérisé en ce que** l'on effectue l'adaptation de dimension au moins en partie avant le début de l'opération de liage.

7. Procédé suivant l'une des revendications précédentes, **caractérisé en ce que** l'on fait débuter (S110) l'opération de liage automatiquement, dès que l'interruption de l'apport de récolte est détectée (S100).

8. Procédé suivant l'une des revendications précédentes, **caractérisé en ce que** la presse (1) à bottes rondes a un capteur (22) de vitesse et/ou un capteur (23) d'apport pour la détection de l'apport de récolte et on détecte (S100) l'interruption de l'apport de récolte au moyen du capteur (22) de vitesse à l'aide d'un arrêt de la presse (1) de bottes rondes et/ou au moyen du capteur (23) d'apport.

9. Procédé suivant l'une des revendications précédentes, **caractérisé en ce que** la presse (1) à bottes rondes est accouplée à un tracteur et détecte (S100) l'interruption de l'apport de récolte au moyen d'un signal (S) qu'elle reçoit du tracteur.

10. Procédé suivant l'une des revendications précédentes, **caractérisé en ce que** l'on détermine (S120) plusieurs fois l'une après l'autre le diamètre (*DI*) réel, on en détermine (S180) une variation (*VD*) en fonction du temps et, lors d'au moins une adaptation (S140, S150) de pression, on adapte la pression de la pièce au moins en partie en fonction de la variation (*VD*) en fonction du temps.

11. Procédé suivant l'une des revendications précédentes, **caractérisé en ce que**, après le début de l'adaptation de dimension on fait commencer (S160) l'opération de liage dès que le diamètre (*DI*) réel s'écarte au plus d'une valeur (*TW*) de tolérance définie à l'avance du diamètre (*DS*) de consigne.

12. Procédé suivant la revendication 10, **caractérisé en ce que**, après le début de l'adaptation de dimension, on fait commencer (S195) l'opération de liage, si au moins une adaptation (S140, S150) de pression a conduit à une variation (*VD*) en fonction du temps du diamètre (*DI*) réel, qui en valeur absolue correspond au plus à une valeur (*SV*) de seuil définie à l'avance.

13. Presse (1) à bottes rondes comprenant un dispositif (10) de presse, par lequel une chambre (18) de presse pour le formage d'une botte (50) de récolte peut être définie au moins en partie, dans lequel une pression de presse appliquée par le dispositif (10) de presse sur la botte (50) de récolte peut être modifiée par au moins un actionneur (16), des moyens (3, 4) d'apport pour un apport de récolte à la chambre (18) de presse, un dispositif (17) de mesure, par lequel un diamètre (*DI*) réel de la botte (50) de récolte peut être déterminé au moins indirectement, ainsi qu'un dispositif (20) de liage pour une opération de liage de la botte (50) de récolte pendant une interruption de l'apport de récolte, **caractérisée en ce que** la presse (1) à bottes rondes est agencée pour effectuer, pendant l'interruption de l'apport de récolte une adaptation de dimension par le fait qu'elle effectue au moins une comparaison (S130) entre le diamètre (*DI*) réel et un diamètre (*DS*) de consigne donné à l'avance au moins comme plage de diamètre de consigne, ainsi qu'au moins une adaptation (S140, S150) de pression, dans laquelle elle adapte automatiquement la pression de presse en fonction d'au moins une comparaison, afin d'égaliser le diamètre (*DI*) réel au diamètre (*DS*) de consigne.

**14.** Presse à bottes rondes suivant la revendication 13, **caractérisée en ce qu'**elle a une unité (25) de commande, qui est reliée en transmission du signal à des capteurs (17, 22, 23) ainsi qu'à l'actionneur (16) et qui est prévue pour la commande du procédé suivant l'une des revendications 1 à 13.

Fig. 1

Fig.3

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110023442 A1
- US 20190098837 A
- EP 3298881 A1